# EUROPÄISCHE PATENTANMELDUNG

(11) **EP 0 530 582 A1**
(43) Veröffentlichungstag der Anmeldung: **10.03.1993**
(21) Anmeldenummer: 92114027.3
(22) Anmeldetag: 18.08.1992
(51) Int. Cl.: B29C 47/20

(54) **Vorrichtung zum Verarbeiten von thermoplastischem Kunststoff mit einer Plastifiziereinheit**

(30) Priorität: 31.08.1991 DE 4129017
(71) Anmelder: Krupp Kautex Maschinenbau GmbH, D-53229 Bonn (DE)
(72) Erfinder: Klüsener, Peter, W-5300 Bonn 2 (DE); Kiefer, Erich, W-5300 Bonn 3 (DE)
(74) Vertreter: Koepsell, Helmut, Dipl.-Ing.

(57) **Zusammenfassung**

Die Erfindung betrifft eine Vorrichtung zum Verarbeiten von thermoplastischem Kunststoff mit einer Plastifiziereinheit, die neben einem Extruder auch einen durch einen Kolben entleerbaren Speicherraum (30) aufweist. Die Zuführung des thermoplastischen Materials in den Speicherraum (30) geschieht durch den Kolben (16), der an seiner Mantelfläche mit wenigstens einer nutförmigen Ausnehmung versehen ist, die einen Aufnahmekanal (38) bildet. In dem Speicherraum (30) und Kolben (16) aufnehmenden Gehäuse ist eine Eintrittsöffnung (32) vorgesehen, an die sich eine nutförmige Ausnehmung anschließt, die einen Zuführungskanal (34) für das thermoplastische Material bildet, dessen Länge in Bewegungsrichtung des Kolbens wenigstens dem Hub desselben entspricht. Zuführungskanal (34) und Aufnahmekanal (38) sind derart angeordnet, daß in beiden Endpositionen des Kolbens wenigstens Teilabschnitte beider Kanäle einander überlappen.

## Beschreibung

Die Erfindung betrifft eine Vorrichtung zum Verarbeiten von thermoplastischem Kunststoff mit einer Plastifiziereinheit gemäß dem Oberbegriff des Anspruches 1 bzw. des Anspruches 2.

Bei einer durch die DE-A-1629404 bekannten Vorrichtung ist der im Querschnitt ringförmige Kolben an seiner einzigen Mantelfläche mit einer nutförmigen Ausnehmung versehen, die parallel zu der vom Kolben ausgeführten Hubbewegungen verläuft und deren Länge etwa dem Hub des Kolbens entspricht. Letzterer ist innerhalb eines Gehäuses angeordnet, das auch den Speicherraum enthält und zudem mit einer Öffnung versehen ist, durch die der in einem Extruder plastifizierte Kunststoff in das Gehäuse eintritt. Die Anordnung ist so getroffen, daß der durch die nutförmige Ausnehmung im Kolben gebildete Aufnahmekanal dieser Eintrittsöffnung gegenüberliegt und somit der durch die Eintrittsöffnung in das Gehäuse eintretende Kunststoff zunächst in diesen Aufnahmekanal gelangt, in welchem er in Richtung auf eine sich daran anschließende Ableitung strömt. Der Nachteil der bekannten Vorrichtung besteht darin, daß der Aufnahmekanal nur in einer Stellung des Kolbens, nämlich der, in welcher sich der Kolben in seiner der Austrittsöffnung des Extrusionskopfes zugekehrten Endposition befindet, von dem aus dem Extruder kommenden plastifizierten Material über seine gesamte Länge durchströmt wird. In allen anderen Positionen des Kolbens befindet sich immer ein Abschnitt des Aufnahmekanals, der außenseitig vom Gehäuse begrenzt wird, an der der Ableitung abgekehrten Seite der Eintrittsöffnung mit der Folge, daß dieser Abschnitt, dessen Länge mit den Hubbewegungen des Kolbens sich ändert, in diesen Positionen von dem durch die Eintrittsöffnung eintretenden Material nicht durchströmt wird. Dies ist insbesondere dann nachteilig, wenn der Kolben verfahrensbedingt einen Hub ausführt, bei welchem in keiner Endposition des Kolbens der Aufnahmekanal über seine gesamte Länge von dem durch die Eintrittsöffnung eintretenden Material durchströmt wird. Jedoch ist es auch bei anderen Betriebsbedingungen unvermeidbar, daß sich im Aufnahmekanal bei jedem Arbeitszyklus für eine bestimmte Zeit Material befindet, welches stagniert, wobei jenes Material, welches zu Beginn des vom Kolben ausgeführten Füllhubes als erstes in den nicht mehr durchflossenen Bereich des Aufnahmekanals gelangt, als letztes beim folgenden Entleerungshub aus dem Aufnahmekanal durch das frische, durch die Eintrittsöffnung nachströmende Material in Richtung auf die Ableitung verdrängt wird. Selbst dann, wenn die Verweilzeiten des stagnierenden Materials im Kopf so kurz sind, daß dieses Material dadurch keine Qualitätseinbuße erleidet, hat die vorbeschriebene Ausgestaltung jedoch zur Folge, daß das Material den Kopf nicht in der zeitlichen Reihenfolge verläßt, in welcher es durch die Eintrittsöffnung in den Kopf eingetreten war. Dies kann insbesondere bei empfindlicheren Kunststoffmaterialien zu merklichen Qualitätseinbußen des Fertigerzeugnisses führen.

Entsprechendes gilt für die Vorrichtung gemäß DE-AS-2161356, bei welcher der thermoplastische Kunststoff in gleicher Weise in den Extrusionskopf eingeführt wird. Ein Unterschied besteht nur insoweit, als bei dieser Vorrichtung der Kolben im Querschnitt ringförmig ausgebildet ist, so daß er eine äußere und eine innere Mantelfläche aufweist.

Die vorstehend beschriebenen Nachteile versucht eine Vorrichtung gemäß DE-OS-4020819 zu vermeiden, bei welcher der Aufnahmekanal an jeder seiner beiden Endbereiche mit einer Ableitung verbunden ist, so daß durch jede Ableitung ein Teilstrom des durch die Eintrittsöffnung eintretenden thermoplastischen Kunststoffes in Richtung auf den Speicherraum fließt. Diese Ausgestaltung hat den Vorteil, daß innerhalb des Aufnahmekanals kein stagnierendes Kunststoffmaterial vorhanden ist, da das gesamte im Aufnahmekanal befindliche Material am Fließvorgang teilnimmt, solange Material von außen durch die Eintrittsöffnung zugeführt wird. Nachteilig ist allerdings, daß das Vorhandensein von zwei Ableitungen an jedem Aufnahmekanal die konstruktiven Möglichkeiten innerhalb des Kolbens einengt, da jedenfalls dann, wenn der Kolben mit zwei oder mehr Aufnahmekanälen versehen ist, nicht in allen Fällen innerhalb des Volumens des Kolbens ausreichend Raum zur Verfügung steht, um die im Vergleich beispielsweise zu der Vorrichtung gemäß DE-AS-2161356 erforderliche doppelte Anzahl von Ableitungen unterzubringen. Außerdem hat die Anordnung einer Ableitung an jedem der beiden Endbereiche des Zuführungskanals eine Veränderung der Strömungsverhältnisse in Abhängigkeit vom Hub des Kolbens insofern zur Folge, als lediglich in der Mittelstellung des Zuführungskanals relativ zur Eintrittsöffnung beide Bereiche des Zuführungskanals, in denen die Kunststoff-Teilströme in zueinander entgegengesetzten Richtungen fließen, gleiche Strömungsverhältnisse aufweisen. In allen anderen Positionen des Aufnahmekanals relativ zur Eintrittsöffnung sind diese Abschnitte unterschiedlich lang, wobei zusätzlich mit der Hubbewegung des Kolbens die Strömungsverhältnisse sich fortlaufend ändern.

Die Nachteile der beiden einleitend erörterten bekannten Vorrichtungen sucht eine weitere Vorrichtung gemäß DE-AS-2625786 dadurch zu vermeiden, daß die Zufuhr des thermoplastischen Kunststoffes axial in den hier ebenfalls ringförmigen Kolben erfolgt, und zwar unter Verwendung von Teleskoprohren, deren Länge so gewählt ist, daß sie die Hubbewegungen des Kolbens überbrücken. Diese Ausbildung hat jedoch den Nachteil, daß durch die Relativbewegung zwischen Kolben und den Teleskoprohren letztere ebenfalls die Wirkung von Kolben haben, welche Tatsache sich nachteilig bezüglich der Druck- und Fließverhältnisse im Extrusionskopf auswirken kann. Zudem hat diese Art der Materialzuführung zur Folge, daß der Extrusionskopf verhältnismäßig lang ist.

Der Erfindung liegt die Aufgabe zugrunde, eine Vorrichtung der einleitend beschriebenen Art so abzuwandeln, daß sie die Nachteile bekannter Vorrichtungen nicht aufweist. So soll die Anbringung des wenigstens einen Aufnahmekanals mit der zugeordneten Ableitung am Kolben wenig Raum beanspruchen. Trotzdem soll sichergestellt sein, daß der Aufnahmekanal über seine gesamte Länge von Material durchströmt wird, ohne daß dieses in bestimmten Bereichen stagniert. Es soll ferner sichergestellt sein, daß die einzelnen Materialteilchen in der Folge, in welcher sie in den Aufnahmekanal eintreten, diesen auch wieder verlassen. Das Kanalvolumen soll keine Änderungen in Abhängigkeit vom Hub des Kolbens erfahren.

Diese Aufgabe wird mit den Merkmalen im Kennzeichen des Anspruches 1 bzw. des Anspruches 2 gelöst. Im Ergebnis handelt es sich somit um ein aus Zuführungskanal und Aufnahmekanal bestehendes Kanalsystem, dessen Länge sich fortwährend ändert, wobei an den einander abgekehrten Enden beider Kanäle jeweils Eintrittsöffnung und Ableitung angeordnet sind, deren Abstand voneinander sich in Abhängigkeit von der Längenänderung, die das Kanalsystem erfährt, sich ebenfalls fortwährend ändert. Dadurch, daß sich an die Eintrittsöffnung im Gehäuse eine nutförmige Ausnehmung anschließt, die einen Zuführungskanal bildet und dem Aufnahmekanal im Kolben gegenüberliegend angeordnet ist, ist bei entsprechend gewählter Länge der beiden Kanäle gewährleistet, daß die Eintrittsöffnung unabhängig von der jeweiligen Stellung des Kolbens immer über den Zuführungskanal mit dem Aufnahmekanal in Verbindung steht. Bei Vorliegen bestimmter Voraussetzungen, u. a. gleicher Länge beider Kanäle, ist eine Anordnung möglich, bei welcher in einer Endposition des Kolbens Zuführungskanal und Aufnahmekanal über ihre gesamte Länge einander gegenüberliegend sich zu einem Gesamtkanal ergänzen, der von Gehäuse und Kolben begrenzt wird. In jeder anderen Position des Kolbens sind Zuführungskanal und Aufnahmekanal in Richtung der Längsachse des Extrusionskopfes gegeneinander versetzt angeordnet, wobei die Länge beider Kanäle jedoch so gewählt sein muß, daß sie in der anderen Endstellung des Kolbens wenigstens mit ihren Endbereichen einander überlappen, so daß eine kontinuierliche Verbindung zwischen beiden Kanälen und somit ein kontinuierliches Fließen des Materials erhalten bleiben. Das von Zuführungskanal und Aufnahmekanal gebildete Gesamtvolumen bleibt unabhängig von der relativen Stellung, die beide Kanäle zueinander einnehmen, konstant.

Es kann zweckmäßig sein, daß Zuführungskanal und Aufnahmekanal die gleiche Länge aufweisen, wenngleich dies nicht unbedingt erforderlich ist. So ist es möglich, einen der Kanäle länger zu machen als den anderen, um so einen bestimmten Abstand zwischen der Eintrittsöffnung im Gehäuse und der Ableitung, die am Kolben angebracht ist, zu überbrücken. Erforderlich ist lediglich, daß in der Endposition des Kolbens, in welcher die beiden Kanäle zusammen die geringste Länge aufweisen, kein Abschnitt in einem der beiden Kanäle vorhanden ist, welcher sich über das jeweils zugeordnete Ende des anderen Kanals erstreckt, ohne daß am Ende dieses Abschnittes eine Abfließmöglichkeit für das Material vorhanden wäre, da sonst tote Zonen gebildet würden, in denen zumindest zeitweilig Material stagniert. Überdies wird es im allgemeinen vorteilhaft sein, die Kanäle so auszubilden und anzuordnen, daß sie in der Endposition, in welcher Eintrittsöffnung und Ableitung den größten Abstand voneinander aufweisen, soweit einander überlappen, daß die Öffnung, durch die das Material vom Zuführungskanal in den Aufnahmekanal eintritt, im Querschnitt nicht kleiner ist als der kleinste Querschnitt von Zuführungskanal bzw. Aufnahmekanal. Die Größe der Durchtrittsöffnung vom Zuführungskanal in den Aufnahmekanal und deren Begrenzungswände sollten so gewählt bzw. ausgeführt sein, daß der Materialstrom keine scharfen Umleitungen erfährt und die Strömungsverhältnisse sich von denen im Zuführungskanal und Aufnahmekanal nur wenig unterscheiden.

Der Zuführungskanal im Gehäuse kann von der Eintrittsöffnung in Richtung auf den Speicherraum verlaufen. Es kann aber auch zweckmäßig sein, die umgekehrte Anordnung vorzusehen, bei welcher der Zuführungskanal von der Eintrittsöffnung sich in Richtung auf das dem Speicherraum abgekehrte Ende des Gehäuses erstreckt. Eine solche Ausgestaltung kann z. B. den Vorteil haben, das durch diesen Zuführungskanal eingespeiste Kunststoffmaterial in einen Bereich an dem dem Speicherraum abgekehrten Ende des Kolbens zu bringen und dort die Ableitung vorzusehen, so daß der übrige Bereich des Kolbens für die Ableitungen und andere Kanäle für Material zur Verfügung steht, das durch andere Zuführungskanäle in das Gehäuse eingespeist worden ist. Diese Ausgestaltung ist besonders im Zusammenhang mit Extrusionsköpfen zum Herstellen von Vorformlingen vorteilhaft. Bei derartigen Extrusionsköpfen wird der Kolben im allgemeinen auch ringförmig ausgebildet und in einem ringförmigen Speicherraum geführt sein. Es ist aber auch möglich, den Kolben massiv zylindrisch auszubilden, und zwar z. B. dann, wenn die Plastifiziereinheit mit ihrem Speicher verwendet wird, um kleinere Mengen an thermoplastischem Material dosiert an eine bestimmte Stelle eines Verarbeitungssystems oder in einen bestimmten Bereich eines Vorformlings oder sonstigen Artikels aus thermoplastischem Kunststoff zu bringen.

Gemäß einem weiteren Vorschlag der Erfindung kann die einen Extrusionskopf aufweisende Plastifiziereinheit mit zwei oder mehr in Umfangsrichtung in Abständen voneinander angeordneten Zuführungskanälen mit jeweils einem im Kolben gegenüberliegend angeordneten Aufnahmekanal versehen sein, wobei jedem Aufnahmekanal eine Ableitung nachgeschaltet ist. Mit einer derartigen Vorrichtung können Vorformlinge mit einer mehrschichtigen Wandung unter Verwendung unterschiedlicher Kunststoffe hergestellt werden.

Bei Vorhandensein von zwei oder mehr Zuführungskanälen und entsprechend zugeordneten Aufnahmekanälen ist es möglich, die Zuführungskanäle von der Eintrittsöffnung in unterschiedlichen Richtungen verlaufend anzuordnen, z. B. derart, daß der Zuführungskanal der einen Eintrittsöffnung in Richtung auf das die Austrittsöffnung aufweisende Ende des Extrusionskopfes verläuft, während der Zuführungskanal der anderen Eintrittsöffnung in entgegengesetzter Richtung verläuft. Dies kann vorteilhaft sein um zu vermeiden, daß sämtliche Zuführungskanäle und damit die ihnen jeweils zugeordneten Aufnahmekanäle in demselben durch zwei Querschnitte begrenzte Abschnitt des Kolbens angeordnet sein müssen. Auch dies dient der bereits in anderem Zusammenhang erwähnten Möglichkeit, die in oder am Kolben befindlichen Kanalsysteme jedes Aufnahmekanals räumlich auseinanderzuziehen. Andere Möglichkeiten, dies zu erreichen, bestehen darin, die Eintrittsöffnungen für den thermoplastischen Kunststoff in der Längsachse des Extrusionskopfes in unterschiedlichen Querschnittsebenen des letzteren anzuordnen, so daß sie auch in Richtung der Längsachse des Kopfes gegeneinander versetzt angeordnet sind. Auch die bereits erwähnte Möglichkeit, die Aufnahmekanäle parallel zur Längsachse des Extrusionskopfes unterschiedlich lang auszubilden, kann dazu dienen, Raum im Kolben für die Unterbringung einer ausreichenden Anzahl von Kanalsystemen verfügbar zu machen.

In der Zeichnung sind einige Ausführungsbeispiele der Erfindung im Schema dargestellt. Es zeigen
- Fig. 1: den Längsschnitt eines Extrusionskopfes, in welchem der Kolben die Position am Ende des Füllhubes einnimmt,
- Fig. 2: eine der Fig. 1 entsprechende Darstellung mit dem Kolben in einer Zwischenposition,
- Fig. 3: eine der Fig. 1 entsprechende Darstellung mit dem Kolben in der Position am Ende des Ausstoßhubes,
- Fig. 4: eine der Fig. 1 entsprechende Darstellung einer zweiten Ausführungsform,
- Fig. 5: eine der Fig. 1 entsprechende Darstellung einer dritten Ausführungsform als Schnitt nach der Linie V-V der Fig. 6,
- Fig. 6: einen Schnitt nach der Linie VI-VI der Fig. 5,
- Fig. 7: den Längsschnitt einer Plastifiziereinheit mit dem Kolben in einer Zwischenposition.

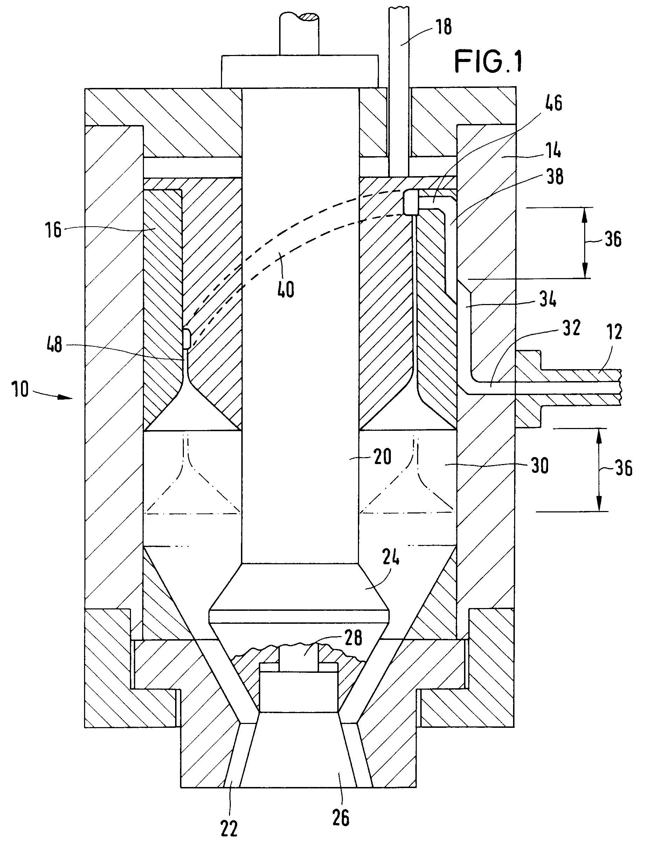

Die in den Figuren 1 - 3 dargestellte Extrusionseinheit zum Herstellen von Vorformlingen, die in einer Blasform aufgeweitet werden, weist einen Extrusionskopf 10 und einen Extruder 12 auf, in welchem der thermoplastische Kunststoff plastifiziert wird. Innerhalb des Gehäuses 14 des Extrusionskopfes ist ein Ringkolben 16 axial hin- und herbewegbar angeordnet. Diesem Ringkolben sind Kolbenstangen 18 zugeordnet, von denen in der Zeichnung nur eine dargestellt ist. Die Kolbenstangen sind mit einer hydraulischen Kolben-Zylinder-Anordnung für den Antrieb des Ringkolbens 16 versehen. Dazu wird auf die DE-AS-2544609 und die US-PS-4,338,071 verwiesen, die derartige Anordnungen und Arbeitsweisen offenbaren.

Innerhalb des Gehäuses 14 und dazu koaxial ist weiterhin ein Hohldorn 20 angeordnet, der gemeinsam mit dem Gehäuse 14 einen Ringraum begrenzt, innerhalb dessen der Ringkolben 16 auf- und abbewegt wird. An dem der Austrittsöffnung 22 des Extrusionskopfes 10 zugekehrten Ende geht der Hohldorn 20 in eine Verdickung 24 über, innerhalb derer ein Kern 26 axial hin- und herverschiebbar angeordnet ist, der die ringförmige Austrittsöffnung 22 innenseitig begrenzt. Der Kern 26 wird von einer innerhalb des Hohldorns 20 angeordneten Stange 28 getragen, die ihrerseits mit einer Kolben-Zylinder-Anordnung versehen ist. Auch dazu wird auf die DE-AS-2544609 bzw. die US-PS-4,338,071 verwiesen, in denen die Funktionen der Teile, insbesondere die Steuerung der Bewegung des Kernes 26 zur Steuerung der Wanddicke des herzustellenden Vorformlings, beschrieben sind.

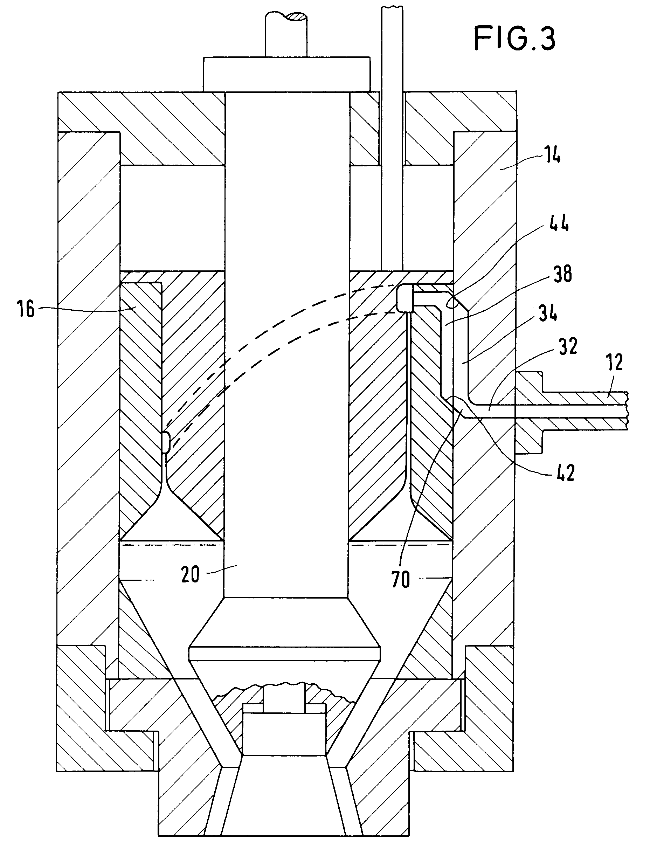

Der von Gehäuse 14 und Hohldorn 20 geführte Ringkolben 16 ist zwischen den beiden in Fig. 1 bzw. Fig. 3 dargestellten Endpositionen hin- und herbewegbar, wobei im Verlauf der Bewegung von der Position gemäß Fig. 3 in die gemäß Fig. 1 ein Speicherraum 30 mit dem vom Extruder 12 kommenden thermoplastischen Material gefüllt wird. Sobald der Kolben 16 die in Fig. 1 dargestellte Endposition erreicht hat, wird er durch entsprechende Beaufschlagung seines Antriebszylinders in Richtung auf die Austrittsöffnung 22 bis zum Erreichen der in Fig. 3 dargestellten Endposition verschoben, wobei das im Speicherraum 30 befindliche Material in Richtung auf die Austrittsöffnung 22 zur Bildung eines schlauchförmigen Vorformlings, der aus der Austrittsöffnung 22 austritt, verdrängt wird.

Die Eintrittsöffnung 32, durch welche das plastifizierte Material aus dem Extruder 12 in den Extrusionskopf 10 eintritt, ist als das Gehäuse 14 durchsetzender Kanal ausgebildet, der sich in eine parallel zur Bewegungsrichtung des Kolbens 16 verlaufende nutförmige Ausnehmung 34 fortsetzt, die einen Zuführungskanal bildet, dessen Länge in Bewegungsrichtung des Kolbens 16 etwa dem Hub 36 desselben entspricht. An der äußeren Mantelfläche des Kolbens 16 ist ebenfalls eine parallel zur Bewegungsrichtung des Kolbens 16 verlaufende nutartige Ausnehmung 38 angebracht, die einen Aufnahmekanal bildet, an dessen einem Ende ein Verteilerkanal 40, der innerhalb des Kolbens 16 angeordnet ist, anschließt. Die Länge des Aufnahmekanals 38 entspricht ebenfalls etwa dem vom Kolben 16 ausgeführten Hub 36. Die Zuführungskanal 34 und Aufnahmekanal 38 bildenden Ausnehmungen in Gehäuse 14 bzw. Kolben 16 sind so angeordnet und bemessen, daß sie in der einen Endlage des Kolbens, nämlich der gemäß Fig. 3, in welcher der Kolben seine Endlage am Ende des Ausstoßhubes einnimmt, einander gegenüberliegen und sich somit zu einem Gesamtkanal ergänzen. Beide Ausnehmungen 34 und 38 sind im Querschnitt etwa halbkreisförmig mit demselben Radius ausgebildet, so daß sie sich in der Position gemäß Fig. 3 zu einem kreisförmigen Gesamtkanal ergänzen.

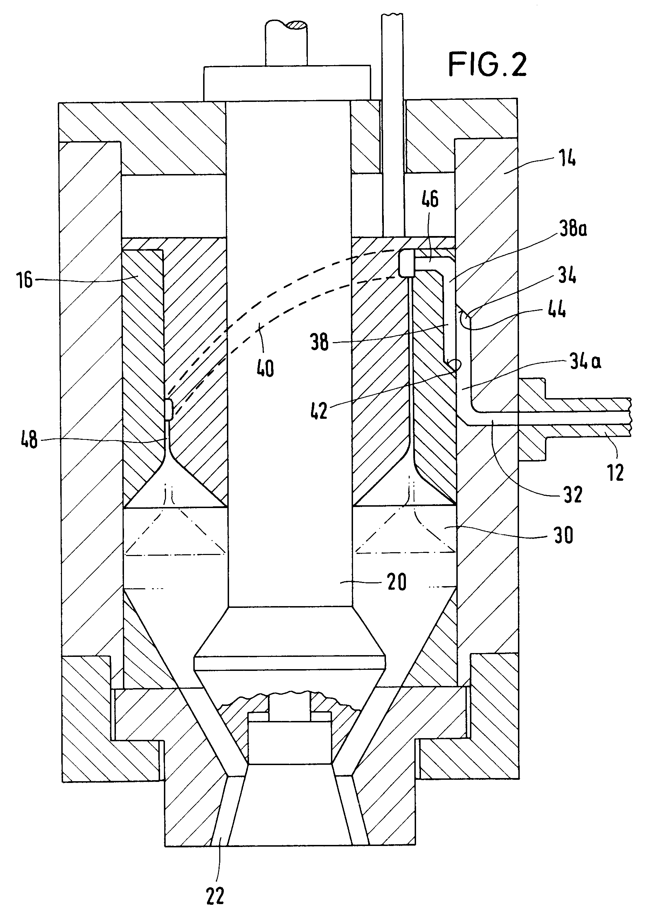

Beide Ausnehmungen sind an ihren Enden derart abgeschrägt, daß die stirnseitigen Begrenzungsflächen beider Ausnehmungen in dieser Position des Kolbens fluchtend aneinander anschließen. Der in dieser Position von beiden Ausnehmungen gemeinsam gebildete Gesamtkanal ist im Querschnitt kreisrund und in Längsrichtung etwa hälftig unterteilt. Im Verlauf der Bewegung des Kolbens in die andere Endposition erfolgt eine relative Axialverschiebung der beiden Ausnehmungen 34, 38 bzw. der durch sie gebildeten Kanäle derart, daß, wie insbesondere das in Fig. 2 der Zeichnung dargestellte Zwischenstadium erkennen läßt, der Bereich, in dem beide Ausnehmungen einander überlappen, immer kürzer wird, so daß für das vom Extruder 12 kommende Material ein Fließweg entsteht, der über seine Länge unterschiedliche Querschnitte aufweist. Dabei gelangt das durch die Eintrittsöffnung 32 in den Extrusionskopf 10 eintretende Material zunächst in den Abschnitt 34a des Zuführungskanals, der radial innenseitig durch die Mantelfläche des Kolbens 16, der bereits einen Teil des Weges in Richtung auf die Endstellung gemäß Fig. 1 zurückgelegt hat, verschlossen ist. Erst nach Passieren der schräg verlaufenden stirnseitigen Begrenzungsfläche 42 des im Kolben 16 befindlichen Aufnahmekanals 38 findet das hindurchströmende Material den Querschnitt, durch die Summe der beiden Querschnitte der Ausnehmungen 34 und 38 gebildet wird. Dies gilt aber nur für einen bestimmten Abschnitt, nämlich bis zum Erreichen der schräg verlaufenden stirnseitigen Begrenzungsfläche 44 der den Zuführungskanal bildenden Ausnehmung 34. Danach steht im Abschnitt 38a lediglich die Querschnittsfläche der den Aufnahmekanal im Kolben 16 bildenden Ausnehmung 38 für das strömende Kunststoffmaterial zur Verfügung, bis letzteres den Verteilerkanal 40 oder, je nach der gewählten Querschnittsform, den im wesentlichen radial verlaufenden Zwischenkanal 46 erreicht, welcher den Aufnahmekanal 38 mit dem Verteilerkanal 40 verbindet. Dies bedeutet, daß das vom Extruder 12 kommende Material nach Verlassen der Eintrittsöffnung 32 bis zum Erreichen des Zwischenkanals 46 in Abhängigkeit von der jeweils zur Verfügung stehenden Querschnittsfläche unterschiedliche Strömungsgeschwindigkeiten aufweist, wobei die Längenanteile der Abschnitte mit bestimmter Strömungsgeschwindigkeit sich zudem im Verlauf des Hubbewegung des Kolbens 16 fortlaufend ändern. Im Augenblick des Zustandes gemäß Fig. 3 ist die Geschwindigkeit des Kunststoffmaterials nach Verlassen der Eintrittsöffnung 32 und bis zum Erreichen des Zwischenkanals 46 nahezu konstant, da der von den beiden Ausnehmungen 34 und 38 gebildete Gesamtkanal in seiner Länge überwiegt. Mit zunehmender Bewegung des Kolbens in Richtung auf die Endposition gemäß Fig. 1 wird der Anteil des Abschnittes, der aus der Gesamtheit der Querschnitte beider Ausnehmungen 34 und 38 besteht, kürzer unter gleichzeitiger Zunahme der Länge der Kanalabschnitte 34a bzw. 38a, in denen dem Material lediglich etwa die halbe Querschnittsfläche als Strömungsquerschnitt zur Verfügung steht.

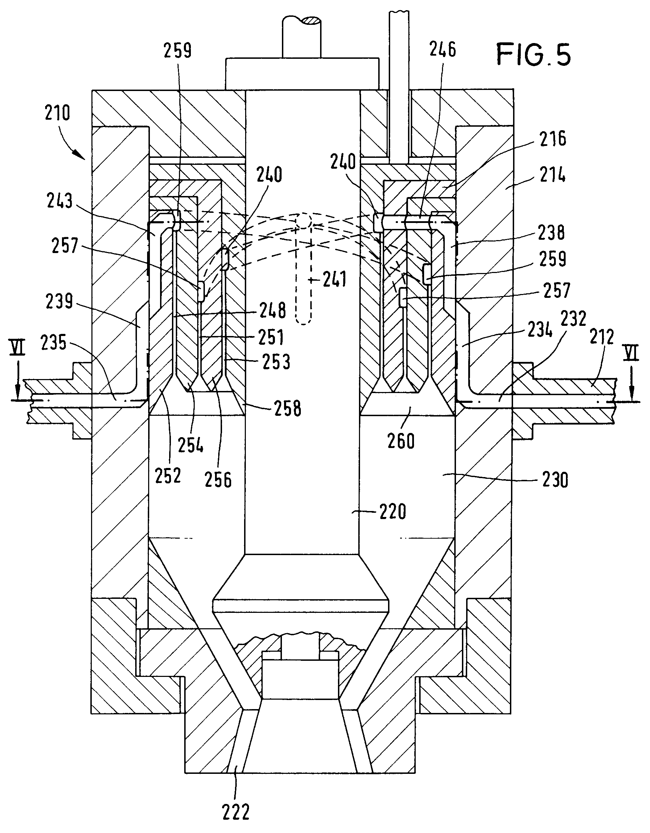

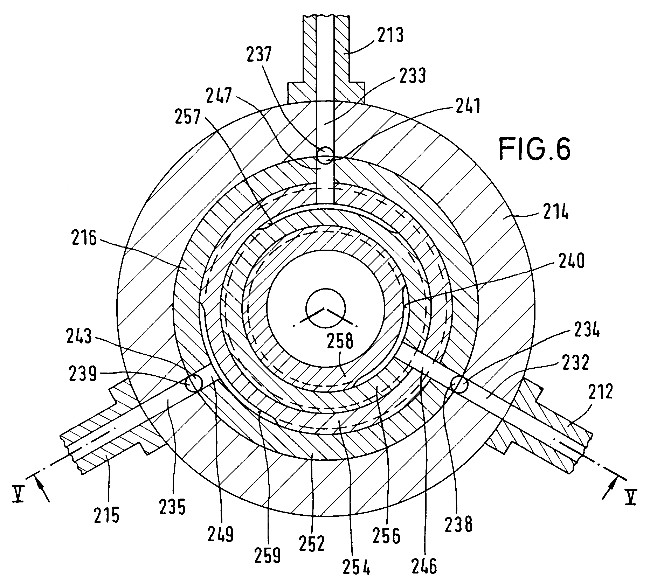

Entscheidend ist jedoch, daß unter allen in Betracht kommenden Betriebszuständen das Volumen des Kanals, welches vom Material nach Verlassen der Eintrittsöffnung 32 und bis zum Erreichen des Zwischenkanals 46 durchströmt wird, unverändert bleibt, und zwar unabhängig von der Position des Kolbens 16 und von dessen Bewegungsrichtung. Es wird somit vermieden, daß während der Bewegung des Kolbens zusätzliche Speicher- bzw. Verdrängungseffekte auftreten, die je nach Anordnung der Kanäle ggf. auch gegenläufig zu den Speicher- und Verdrängungsvorgängen im eigentlichen Speicherraum wirken könnten und zu nachteiligen Einflüssen führen könnten. Das Fehlen solcher zusätzlicher und unkontrollierbarer Speicher- und Verdrängungseffekte ist insbesondere wichtig bei der Herstellung von Vorformlingen, deren Wandung mehrschichtig als Laminat ausgebildet ist, wie dies noch im Zusammenhang mit der Ausführungsform gemäß den Figuren 5 und 6 beschrieben wird.

Von Bedeutung ist weiterhin, daß in keiner möglichen relativen Position des Kolbens 16 zum Gehäuse 14 und damit der relativen Position des Zuführungskanals 34 zum Aufnahmekanal 38 in einem der Kanäle ein Raum, Abschnitt oder Bereich entsteht, in welchem das Material stagniert. Vielmehr ist, wie aus den Figuren 1 - 3 hervorgeht, in jeder Phase des Füllvorganges gewährleistet, daß das vom Extruder 12 kommende Material einen eindeutig definierten Fließweg findet, der keinerlei Abschnitte oder dergleichen aufweist, in denen Material unkontrolliert verweilen könnte, so daß unter allen gegebenen Umständen die Materialpartikel, die die Eintrittsöffnung 32 passieren, in derselben Reihenfolge, in der sie in den Extrusionskopf 10 eintreten, auch den Zwischenkanal 46 passieren und damit den Extrusionskopf 10 auch in derselben Reihenfolge verlassen. Dies gilt auch dann, wenn, abweichend von der Darstellung in der Zeichnung, Zuführungskanal 34 und Aufnahmekanal 38 unterschiedlich lang sind. Es muß lediglich sichergestellt sein, daß die relativ gegeneinander bewegbaren Teile keine Position einnehmen können, in welcher wenigstens einer der beiden Kanäle einen Abschnitt bildet, der über das Ende des jeweils anderen Kanals hinausragt und dabei nicht mit einer Ableitung für das Material verbunden ist. Unter Zugrundelegung der Positionen, die die Teile in Fig. 3 einnehmen, bedeutet dies z. B., daß der Aufnahmekanal 38 in der dort dargestellten Endposition nach oben sich weiter erstrecken könnte als der Zuführungskanal 34, da das in diesem Abschnitt befindliche Material in jedem Fall durch den Zwischenkanal 46 abströmen kann. Hingegen würde eine Verlängerung des Aufnahmekanals 38 nach unten über die Kante der Schrägfläche 70, die den Zuführungskanal stirnseitig begrenzt, dazu führen, daß in der Position des Kolbens gemäß Fig. 3 in diesem die Kante der stirnseitigen Begrenzungsfläche 70 überragenden Abschnitt das darin befindliche Material zeitweilig stagniert.

Wesentlich ist ferner, daß in jedem Fall die Vorteile der Erfindung mit sehr einfachen Mitteln erreicht werden, die, abgesehen vom Anbringen der den Zuführungskanal 34 bildenden Ausnehmung, keinerlei Mehraufwand erfordern und weder in konstruktiver noch in verfahrenstechnischer Hinsicht irgendeine Komplizierung des Extrusionskopfes bewirken.

Beim Ausführungsbeispiel gemäß den Figuren 1 - 3 verläuft der Zuführungskanal von der Eintrittsöffnung 32 nach oben, also in Richtung auf das der Austrittsöffnung 22 des Extrusionskopfes 10 abgekehrte Ende des letzteren, wobei der Aufnahmekanal 38 sich von seinem der Eintrittsöffnung 32 zugekehrten Ende ebenfalls nach oben erstreckt, so daß der Zwischenkanal 46, durch welchen das plastifizierte Material in den innerhalb des Kolbens 16 befindlichen Verteilerkanal 40 eintritt, auch nahe dem der Austrittsöffnung 22 abgekehrten Ende des Kolbens 16 angeordnet sein kann. Dies gibt die Möglichkeit, auch den Verteilerkanal 40 in dem Abschnitt des Kolbens 16 anzuordnen, welcher der Austrittsöffnung 22 abgekehrt ist. Im Verteilerkanal 40 wird das plastifizierte Material, welches durch den Aufnahmekanal 38 und den Zwischenkanal 46 als geschlossener Strang fließt, in einen Hohlstrang umgewandelt, indem es im Verteilerkanal 40 über einen Umfang von 360° verteilt wird, so daß es aus dem an den Verteilerkanal 40 anschließenden Ringkanal 48 als im Querschnitt ringförmiger Strom in den Speicherraum 30 eintritt. Dabei sind Verteilerkanal 40 und Ringkanal 48 innerhalb des Ringkolbens 16 angeordnet.

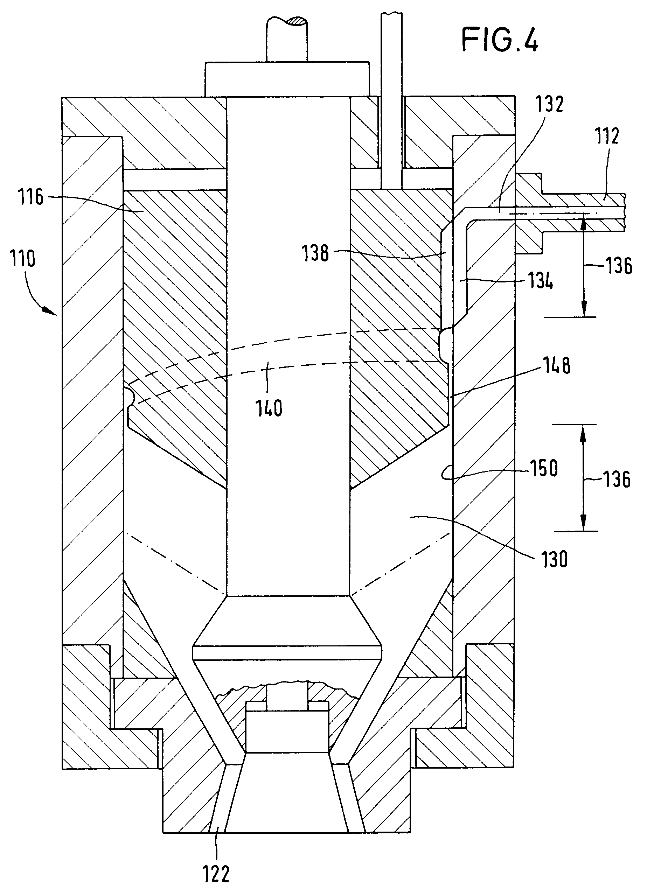

Das Ausführungsbeispiel gemäß Fig. 4 stimmt in wesentlichen Teilen mit dem gemäß den Figuren 1 - 3 überein, so daß gleiche Teile mit gleichen, jedoch um jeweils 100 höheren Bezugszeichen versehen sind. Der wesentliche Unterschied besteht darin, daß beim Ausführungsbeispiel gemäß Fig. 4 der Zuführungskanal 134 von der Eintrittsöffnung 132 sich axial in Richtung auf die Austrittsöffnung 122 erstreckt, also bei normaler Anordnung des Extrusionskopfes 110 nach unten. Dies hat zur Folge, daß der Extruder 112 im Vergleich zur Anordnung gemäß den Figuren 1 - 3 höher am Kopf 110 angebracht ist. Aus diesem Unterschied ergibt sich auch die Konsequenz, daß der Aufnahmekanal 138 an der äußeren Mantelfläche des Kolbens 116 sich auf der der Austrittsöffnung 122 des Extrusionskopfes 116 abgekehrten Seite des Verteilerkanals 140 erstreckt, so daß das Material im Aufnahmekanal 138 in Richtung auf die Austrittsöffnung 132 fließt, wohingegen es bei der Ausführungsform gemäß den Fig. 1 - 3 in entgegengesetzter Richtung, also bei normaler Anordnung des Kopfes 10, nach oben fließt. Die Anordnung gemäß Fig. 4 hat zur Folge, daß die beiden Kanäle 134 und 138 in der in Fig. 4 dargestellten Position am Ende des Füllhubes die Positionen einnehmen, in welcher sie den größten Bereich gegenseitiger Überlappung aufweisen, wohingegen in der anderen Endposition des Kolbens, die jener gemäß Fig. 3 entspräche, die beiden Kanäle 134, 138 die Positionen mit geringster gegenseitiger Überlappung einnehmen. Ein weiterer Unterschied besteht darin, daß der Verteilerkanal 140 der Ausführungsform gemäß Fig. 4 auf der äußeren Mantelfläche des Kolbens 116 angebracht ist, so daß der daran anschließende Ringkanal 148 sich zwischen der inneren Mantelfläche 150 des Gehäuses 114 sowie der äußeren Mantelfläche des Ringkolbens 116 befindet.

Da bei den beiden Ausführungsbeispielen gemäß den Figuren 1 - 3 und 4 lediglich ein Extruder 12 bzw. 112 vorgesehen ist, besteht die Wandung des unter Anwendung dieser Vorrichtungen jeweils hergestellten Vorformlings auch nur aus einer Schicht und einer Materialart. Es ist aber auch ohne weiteres möglich, die Vorrichtung gemäß der Erfindung zur Herstellung von Vorformlingen zu verwenden, deren Wandung als Laminat ausgebildet ist und aus wenigstens zwei Schichten, ggf. aus unterschiedlichen Materialien, besteht. Eine Ausführungsform einer solchen Vorrichtung ist in den Figuren 5 und 6 der Zeichnung dargestellt, in welcher Teile, die denen des Ausführungsbeispiels gemäß den Figuren 1 - 3 entsprechen, mit gleichen, jedoch um jeweils 200 höheren Bezugszeichen versehen sind.

Dem Extrusionskopf 210 der Ausführungsform gemäß den Figuren 5 und 6 sind drei Extruder 212, 213 und 215 zugeordnet. Demzufolge weist das Gehäuse 214 des Extrusionskopfes 210 drei Eintrittsöffnungen 232, 233 und 235 auf, die sich jeweils in Zuführungskanäle 234, 237, 239 fortsetzen. Da jedem Zuführungskanal ein Aufnahmekanal gegenüberliegt, ist der Ringkolben 216 mit drei Aufnahmekanälen 238, 241, 243 versehen, an die sich jeweils an dem der Eintrittsöffnung abgekehrten Ende derselben unterschiedlich lange, im wesentlichen radial verlaufende Zwischenkanäle 246, 247, 249 anschließen.

Der Ringkolben 216 ist aus insgesamt vier Hülsen 252, 254, 256, 258 aufgebaut, die koaxial zueinander und zum Hohldorn 220 angeordnet sind und entsprechend der Anzahl der Extruder drei Ringkanäle 248, 251, 253 begrenzen, die analog dem Ringkanal 48 des Ausführungsbeispiels gemäß den Figuren 1 - 3 koaxial zum Hohldorn 220 verlaufen.

Der aus dem dem Extruder 215 zugeordneten Aufnahmekanal 243 kommende Materialstrom gelangt nach Passieren des Zwischenkanals 249, der durch die äußere Hülse 252 des Ringkolbens 216 hindurchgeht, in den Verteilerkanal 259, der am Außenumfang der Hülse 254 angeordnet ist und, wie schon in anderem Zusammenhang beschrieben, dazu dient, den bis zum Verlassen des Zwischenkanals 249 geschlossenen Materialstrom aufzuteilen und zu verteilen, so daß er vom Zwischenkanal 249 nach beiden Seiten in Umfangsrichtung durch den Verteilerkanal 259 fließt, bis die beiden so gebildeten Teilströme sich in dem den Zwischenkanal 249 etwa gegenüberliegenden, also letzterem gegenüber um 180° versetzten Bereich des Verteilerkanales 259 unter Bildung eines ringförmigen, geschlossenen Materialstroms zusammenfließen, der dann durch den Ringkanal 248 in Richtung auf den Speicherraum 230 fließt.

Entsprechendes gilt für die von den anderen beiden Extrudern 212, 213 kommenden Materialströme, die in Verteilerkanäle 240 bzw. 257 gelangen und von dort jeweils in die nachgeschalteten Ringkanäle 251 bzw. 253 fließen.

Sämtliche Ringkanäle 248, 251, 253 münden an dem der Austrittsöffnung 222 des Extrusionskopfes 210 zugekehrten Ende des Kolbens 216 in einen Sammelkanal 260, in dem aus den einzelnen Materialströmen in den Ringkanälen 248, 251, 253 ein Laminat gebildet wird, welches dann als Laminat im Speicherraum 230 zunächst gespeichert wird, bis es bei der nächsten Entleerungsphase, die sich an den in Fig. 5 der Zeichnung dargestellten Betriebszustand anschließt, aus dem Speicherraum in Richtung auf die Austrittsöffnung 222 verdrängt wird.

Aus den vorstehend erläuterten Fließwegen der insgesamt drei Materialströme ergibt sich, daß das vom Extruder 215 in den Extrusionskopf 210 geförderte Material die äußere Schicht der Laminatwandung des Vorformlings bildet. Das aus dem Extruder 212 kommende Material bildet die innere Schicht, so daß das aus dem Extruder 213 stammende Material die mittlere der drei Schichten bildet. Die Auswahl der Materialarten für die einzelnen Schichten hängt von den jeweiligen Gegebenheiten ab. Dies gilt auch für die Dicke der einzelnen Schichten. Insoweit handelt es sich bei den Zeichnungen nur um Schemadarstellungen.

Bei dem Ausführungsbeispiel gemäß den Figuren 5 und 6 verlaufen sämtliche Zuführungskanäle 234, 237, 239 von der jeweils zugehörigen Eintrittsöffnung nach oben, also in Richtung auf das der Austrittsöffnung 222 abgekehrte Ende des Extrusionskopfes 210, wobei alle Zuführungskanäle und die Aufnahmekanäle so angeordnet sind, daß sie oben und unten jeweils in einer Ebene enden. Dies hat jedenfalls dann, wenn die Kanäle auch bezüglich ihrer Breite übereinstimmen, den Vorteil, daß es möglich ist, durch Verdrehen des Kolbens aus einer bestimmten Winkellage um jeweils 120° die Lage der Schichten in dem die Wandung des Vorformlings bildenden Laminat zu ändern derart, daß beispielsweise bei einer Drehung des Kolbens 216 um seine Achse aus der in Fig. 6 dargestellten Position um 120° entgegen dem Uhrzeigersinn das aus dem Extruder 212 in den Extrusionskopf gespeiste Material nicht, wie im Fall der Anordnung gemäß Fig. 6, die innere Schicht des Laminats, sondern dessen äußere Schicht bildete. Das aus dem Extruder 213 kommende Material würde nicht die mittlere, sondern die innere Schicht bilden. Das aus dem Extruder 215 zugespeiste Material würde nach einer derartigen Drehung die innere Schicht des Laminats bilden. Bei Einspeisung unterschiedlicher Materialien von den drei Extrudern könnte somit die Anordnung der Schichten unterschiedlichen Materials im Laminat durch eine einfache Maßnahme geändert werden. Entsprechendes gilt auch bei einem Extrusionskopf, der mit einer anderen Anzahl von Extrudern zusammenwirkt. Voraussetzung ist lediglich, daß die Extruder in gleichen Winkelabständen angeordnet sind. Bei zwei Extrudern wäre somit eine Drehung des Kolbens um 180° erforderlich, um den vorstehend beschriebenen Effekt zu erreichen.

Es ist aber auch ohne weiteres möglich, die Anordnung so zu treffen, daß die Zuführungskanäle unterschiedliche Richtungen aufweisen, also beispielsweise derart, daß bei einem Extrusionskopf mit zwei Extrudern die resultierende Anordnung eine Kombination der Ausführungsformen gemäß den Figuren 1 - 3 und Fig. 4 darstellt. Zwar würden dann die beiden Materialströme zwischen Eintrittsöffnung und Verteilerkanal innerhalb des Kolbens in entgegengesetzten Richtungen fließen. Dies ist jedoch für die Funktionsweise des Extrusionskopfes ohne Belang. Eine solche Anordnung, die selbstverständlich auch bei Vorhandensein von drei oder mehr Extrudern möglich ist, könnte jedoch den Vorteil aufweisen, die Anordnung der einzelnen Kanalsysteme innerhalb des Kolbens zu vereinfachen, da sie besser räumlich voneinander getrennt werden können. Die Anordnung der Zuführungskanäle und damit auch der jeweils zugehörigen Aufnahmekanäle in unterschiedlichen, d. h. entgegengesetzten Richtungen kann auch benutzt werden, um die Eintrittsöffnungen am Extrusionskopf auch in ihrer Höhenlage, also in Richtung der Längsachse des Kopfes, gegeneinander versetzt anordnen zu können. Dies würde ggf. für die Herstellung der Verbindung zwischen Extrusionskopfes einerseits und den einzelnen Extrudern andererseits mehr Platz schaffen.

Bei sämtlichen in den Figuren 1 - 6 der Zeichnung dargestellten Ausführungsbeispielen sind an die Aufnahmekanäle Verteilerkanäle angeschlossen, die sich in Umfangsrichtung des Kopfes über 360° erstrecken. Es ist aber in an sich bekannter Weise auch möglich, zur Bildung des Vorformlings bzw. wenigstens einer Schicht eines aus einem Laminat bestehenden Vorformlings die Anordnung so zu treffen, daß zwei Verteilerkanäle vorgesehen sind, die sich jeweils über einen Umfangsbereich von etwa 180° erstrecken und in einen gemeinsamen Ringkanal, bei dem es sich ggf. auch um den Sammelkanal handeln kann, der sich über 360° erstreckt, fortsetzen. Eine solche Ausgestaltung, bei welcher der Vorformling bzw. die jeweilige Schicht des Laminats sich aus zwei über jeweils 180° im Querschnitt erstreckenden Bereichen zusammensetzt, kann insbesondere dann in Betracht kommen, wenn das von einem Extruder kommende Material auf zwei Eintrittsöffnungen verteilt wird.

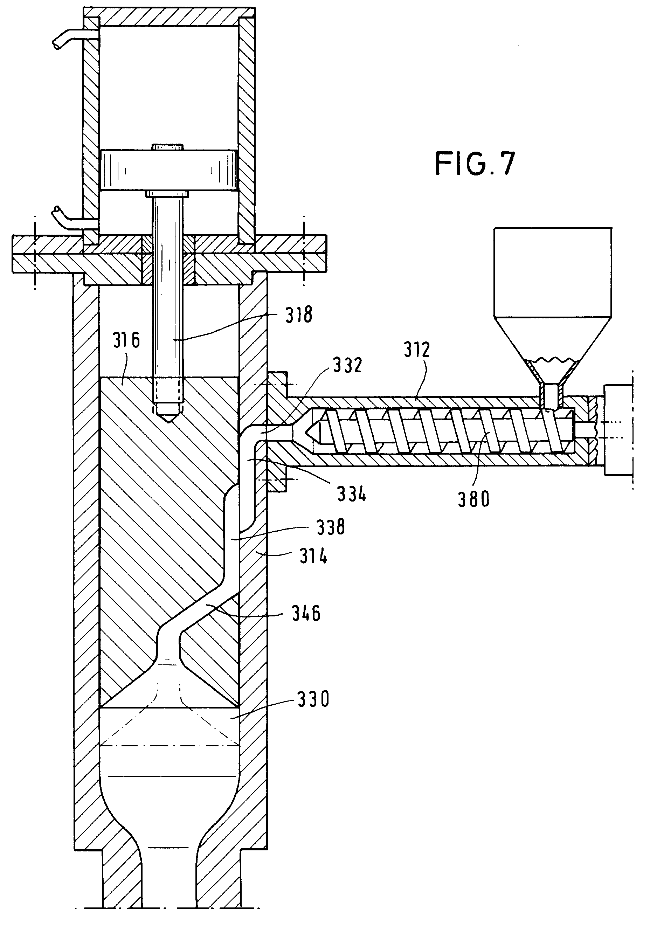

Bei dem in Fig. 7 dargestellten Ausführungsbeispiel handelt es sich um eine Plastifiziereinheit mit einem Speicher, die in ähnlicher Weise aufgebaut ist wie die Ausführungsbeispiele gemäß den Figuren 1 - 6, so daß übereinstimmende Teile mit gleichen Bezugszeichen versehen sind, die jedoch gegenüber denen des Ausführungsbeispiels gemäß den Figuren 1 - 3 um 300 höher sind. Ein wesentlicher Unterschied gegenüber den anderen Ausführungsbeispielen besteht darin, daß innerhalb des Gehäuses 314 ein Kolben 316 geführt ist, der, jedenfalls über dem größten Teil seiner axialen Erstreckung, als Vollkolben ausgebildet ist, wobei der an der der Kolbenstange 318 abgekehrten Seite des Kolbens 316 befindliche Speicherraum zylindrisch, also nicht ringförmig ist. Der sich an die Eintrittsöffnung 332 anschließende Zuführungskanal 334 verläuft von der Eintrittsöffnung 332 in Richtung auf den Speicherraum 330, so daß insoweit Übereinstimmung mit dem Ausführungsbeispiel gemäß Fig. 4 besteht.

Die an den Aufnahmekanal 338 anschließende Ableitung 346 verläuft in Richtung auf die Mittelachse des Kolbens 316, von der aus sie sich trichterförmig zu dem dem Speicherraum 330 zugekehrten Stirnende des Kolbens 316 hin erweitert. D. h., daß in diesem Fall das Kunststoffmaterial nicht als im Querschnitt ringförmiger Strom, sondern als Vollstrang in den Speicherraum 330 einströmt, in welchem es der Form des Speicherraums entsprechend die Gestalt eines vollen Zylinders annimmt.

Im übrigen arbeitet auch diese Vorrichtung im Zusammenhang mit dem Einleiten des Materials in das den Speicherraum enthaltende Gehäuse in der im Zusammenhang mit den anderen Ausführungsformen beschriebenen Weise, wobei auch sämtliche beschriebenen Vorteile vorhanden sind.

Dem Gehäuse 314 mit Kolben 316 und Speicherraum 330 kann ein Extrusionskopf nachgeschaltet sein, wie dies beispielsweise in der bereits erwähnten DE-OS-1629404 beschrieben und dargestellt ist. Es besteht aber auch die Möglichkeit, die in Fig. 7 dargestellte Ausführungsform für andere Zwecke zu verwenden, beispielsweise zum dosierten Zuführen von kleineren Materialmengen in einen extrudierten Vorformling oder ggf. auch in einen mittels Spritzgießen hergestellten Formling. Es kann sich dabei z. B. darum handeln, einen Vorformling bzw. den daraus herzustellenden Hohlkörper mit einer Auflage aus einem bestimmten Material zu versehen oder innerhalb der Wandung des Vorformlings eine Schicht aus einem bestimmten Material einzubringen, die sich nicht über die gesamte Länge und/oder über den gesamten Umfang des Vorformlings zu erstrecken braucht.

Hierbei könnte möglicherweise die Zielsetzung überwiegend darin bestehen, den Kolben zum dosierten Einbringen kleinerer Materialmengen in das herzustellende Erzeugnis zu verwenden, da mit der Bewegung des Kolbens die Mengen besser dosiert werden können als durch Betätigen des Extruders, der bezüglich seiner bewegten Teile, bei denen es sich im wesentlichen um die Schnecke 380 handelt, und des in ihm befindlichen thermoplastischen Materials ein relative träges System darstellt.

Bei sämtlichen in der Zeichnung dargestellten Ausführungsbeispielen verlaufen die Zuführungskanäle und Aufnahmekanäle parallel zur Hubbewegung des Kolbens. Es ist auch möglich, die Kanäle schräg verlaufend anzuordnen, und zwar dann, wenn der Kolben, wie dies beispielsweise zu einer gleichmäßigen Verteilung des Materials im Speicherraum denkbar ist, während seiner Hubbewegungen auch gleichzeitig eine Drehbewegung um seine Achse ausführt.

## Patentansprüche

1. Vorrichtung zum Verarbeiten von thermoplastischem Kunststoff mit einer Plastifiziereinheit zum Herstellen von Hohlkörpern aus thermoplastischem Kunststoff durch Extrusions-Blasformen, welche Plastifiziereinheit wenigstens einen Extruder (12; 112; 212, 213, 215) und einen Extrusionskopf (10; 110; 210) mit einem Gehäuse (14; 114; 214) und einer vorzugsweise ringförmigen Austrittsöffnung (22; 122; 222) aufweist, wobei der Extrusionskopf (10; 110; 210) mit wenigstens einem Speicherraum (30; 130; 230) zum Speichern von in dem wenigstens einen Extruder plastifiziertem Material und mit einem im Gehäuse geführten, zwischen zwei Endpositionen bewegbaren Kolben (16; 116; 216) zum Ausstoßen des gespeicherten Materials aus dem Speicherraum zur Bildung von Vorformlingen versehen ist und der Kolben an seiner Mantelfläche wenigstens eine nutförmige Ausnehmung aufweist, die wenigstens einen Aufnahmekanal (38; 138; 238, 241, 243) bildet und entsprechend der von der Mantelfläche des Kolbens bei dessen Bewegungen zwischen den Endpositionen ausgeführten Bewegung verläuft, und wenigstens eine im Gehäuse angeordnete Eintrittsöffnung (32; 132; 232, 233, 235) für den thermoplastischen Kunststoff vorgesehen ist und der Aufnahmekanal (38; 138; 238, 241, 243) eine Länge aufweist, die wenigstens dem Hub (36) des Kolbens (16; 116; 216) entspricht, und an einem seiner beiden Endbereiche mit jeweils einer vom Kolben getragenen Ableitung (46; 140; 246, 247, 248) verbunden ist, durch die das durch die Eintrittsöffnung eintretende thermoplastische Material in Richtung auf den Speicherraum (30; 130; 230) fließt, dadurch gekennzeichnet, daß sich an die Eintrittsöffnung (32; 132; 232, 233, 235) im Gehäuse (14; 114; 214) eine entsprechend der Bewegung der Mantelfläche des Kolbens (16; 116; 216) bei dessen Bewegungen zwischen den Endpositionen verlaufende nutförmige Ausnehmung anschließt, die einen Zuführungskanal (34; 134; 234, 237, 239) bildet, dessen Länge wenigstens dem Hub des Kolbens entspricht, und die Eintrittsöffnung für das vom Extruder kommende Material an dem Ende des Zuführungskanals in diesen mündet, welches dem Ende des Aufnahmekanals, von welchem die Ableitung abgeht, abgekehrt ist, und Aufnahmekanal (38; 138; 23(, 241, 243) und Zuführungskanal (34; 134; 234, 237, 239) derart angeordnet sind, daß in allen Positionen des Kolbens (16; 116; 216) wenigstens Teilabschnitte beider Kanäle einander überlappen.

2. Vorrichtung zum Verarbeiten von thermoplastischem Kunststoff mit einer Plastifiziereinheit, die einen Extruder (312) und eine Speichereinrichtung zum Speichern von in dem Extruder plastifizierten Material mit einem Gehäuse (314), einem Speicherraum (330) und mit einem im Gehäuse geführten, zwischen zwei Endpositionen bewegbaren Kolben (316) zum Ausstoßen des gespeicherten Materials aus dem Speicherraum (330) aufweist, wobei der Kolben (316) an seiner Mantelfläche mit einer nutförmigen Ausnehmung versehen ist, die einen Aufnahmekanal (338) bildet und entsprechend der von der Mantelfläche des Kolbens bei dessen Bewegungen zwischen den Endpositionen ausgeführten Bewegungen verläuft und mit einer im Gehäuse angeordneten Eintrittsöffnung (332) für den thermoplastischen Kunststoff, wobei der Aufnahmekanal (338) eine Länge aufweist, die wenigstens dem Hub des Kolbens (316) entspricht, und an einem seiner beiden Endbereiche mit jeweils einer vom Kolben getragenen Ableitung (346) verbunden ist, durch die das durch die Eintrittsöffnung (332) eintretende thermoplastische Material in Richtung auf den durch den Kolben (316) entleerbaren Speicherraum (330) fließt, dadurch gekennzeichnet, daß sich an die Eintrittsöffnung (332) im Gehäuse (314) eine entsprechend der Bewegung der Mantelfläche des Kolbens (316) bei dessen Bewegungen zwischen den Endpositionen verlaufende nutförmige Ausnehmung anschließt, die einen Zuführungskanal (334) bildet, dessen Länge wenigstens dem Hub des Kolbens (316) entspricht, wobei die Eintrittsöffnung (332) für das vom Extruder kommende Material an dem Ende des Zuführungskanals (334) in diesen mündet, welches dem Ende des Aufnahmekanals (338), von welchem die Ableitung (346) abgeht, abgekehrt ist, und Aufnahmekanal (338) und Zuführungskanal (334) derart angeordnet sind, daß in allen Positionen des Kolbens (316) wenigstens Teilabschnitte beider Kanäle einander überlappen.

3. Vorrichtung nach Anspruch 1 oder 2, dadurch gekennzeichnet, daß Zuführungskanal (34; 134; 234, 237, 239; 334) und Aufnahmekanal (38; 138; 238, 241, 243; 338) dieselbe Länge aufweisen.

4. Vorrichtung nach Anspruch 1 oder 2, dadurch gekennzeichnet, daß der Zuführungskanal (134; 334) von der Eintrittsöffnung (132; 332) in Richtung auf den Speicherraum (130; 330) verläuft.

5. Vorrichtung nach Anspruch 1 oder 2, dadurch gekennzeichnet, daß der Zuführungskanal (34; 234, 237, 239) von der Eintrittsöffnung (32; 232, 233, 235) in Richtung auf das dem Speicherraum (30; 230) abgekehrte Ende des Gehäuses (14; 214) verläuft.

6. Vorrichtung nach Anspruch 1 oder 2, dadurch gekennzeichnet, daß Zuführungskanal (34; 134; 234, 237, 239; 334) und Aufnahmekanal (38; 138; 238, 241, 243; 338) parallel zur Achse des Speicherraums (330) verlaufen.

7. Vorrichtung nach Anspruch 1 oder 2, dadurch gekennzeichnet, daß Zuführungskanal und Aufnahmekanal entsprechend einer Resultierenden verlaufen, die sich aus der Bewegung des Kolbens zwischen dessen Endpositionen und einer gleichzeitig erfolgenden Rotationsbewegung des Kolbens um seine Achse ergibt.

8. Vorrichtung nach Anspruch 1 oder 2, dadurch gekennzeichnet, daß die Ausnehmungen in Gehäuse (14; 114; 214; 314) und Kolben (16; 116; 216; 316) zur Bildung von Zuführungskanal (34; 134; 234, 237, 239; 334) bzw. Aufnahmekanal (38; 138; 238, 241, 243; 338) im Querschnitt im wesentlichen halbkreisförmig sind.

9. Vorrichtung nach Anspruch 1 oder 2, dadurch gekennzeichnet, daß die Ausnehmungen in Gehäuse (14; 114; 214; 314) und Kolben (16; 116; 216; 316) zur Bildung von Zuführungskanal (34; 134; 234, 237, 239; 334) bzw. Aufnahmekanal (38; 138; 238, 241, 243; 338) denselben Radius aufweisen.

10. Vorrichtung nach Anspruch 1 oder 2, dadurch gekennzeichnet, daß der Kolben (16; 116; 216) als Ringkolben ausgebildet ist.

11. Vorrichtung nach Anspruch 1 oder 2, dadurch gekennzeichnet, daß der Kolben (316) zylindrisch ausgebildet ist.

12. Vorrichtung nach Anspruch 1 oder 2, dadurch gekennzeichnet, daß in der Endposition des Kolbens (16; 116; 216; 316), in welcher Eintrittsöffnung (32; 132; 232, 233, 235; 332) und jeweils zugehörige Ableitung (46; 146; 246, 247, 249; 346) ihren größten Abstand voneinander aufweisen, der die Verbindung zwischen beiden Kanälen bildende Querschnitt nicht kleiner ist als der kleinste Querschnitt jedes der beiden Kanäle.

13. Vorrichtung nach Anspruch 1, dadurch gekennzeichnet, daß der Extrusionskopf (210) mit zwei oder mehr in Umfangsrichtung in Abständen voneinander angeordneten Zuführungskanälen (234, 237, 239) mit jeweils einem im Kolben (216) angeordneten Aufnahmekanal (238, 241, 243) versehen ist und jedem Aufnahmekanal eine Ableitung (246, 247, 249) nachgeschaltet ist.

14. Vorrichtung nach Anspruch 13, dadurch gekennzeichnet, daß die Zuführungskanäle von der Eintrittsöffnung in unterschiedlichen Richtungen verlaufend angeordnet sind.

15. Vorrichtung nach Anspruch 13, dadurch gekennzeichnet, daß jeder Eintrittsöffnung (232, 233, 235), durch welche Material in einen Zuführungskanal (234, 237, 239) eintritt, ein besonderer Extruder (212, 213, 215) zugeordnet ist.

16. Vorrichtung nach Anspruch 13, dadurch gekennzeichnet, daß wenigstens zwei Eintrittsöffnungen von einem gemeinsamen Extruder gespeist werden und der Extruder über ein Verbindungskanalsystem mit den wenigstens zwei Eintrittsöffnungen verbunden ist.

17. Vorrichtung nach Anspruch 13, dadurch gekennzeichnet, daß die vom Ende jedes Aufnahmekanals (138) abgehende Ableitung als Verteilerkanal (140) ausgebildet ist, der sich über einen Umfang von 360° erstreckt.

18. Vorrichtung nach Anspruch 13, dadurch gekennzeichnet, daß die vom Ende des Aufnahmekanals (38; 238, 241, 243) abgehende Ableitung (46; 246, 247, 249) in einen Verteilerkanal (40; 240, 257, 259) mündet.

19. Vorrichtung nach Anspruch 17 oder 18, dadurch gekennzeichnet, daß der Verteilerkanal (40; 240, 257, 259) innerhalb des Kolbens (16; 216) angeordnet ist.

20. Vorrichtung nach Anspruch 17 oder 18, dadurch gekennzeichnet, daß der Verteilerkanal (140) auf der äußeren Umfangsfläche des Kolbens (116) verlaufend angeordnet ist.

21. Vorrichtung nach Anspruch 13, dadurch gekennzeichnet, daß die Eintrittsöffnungen für den thermoplastischen Kunststoff auch in Richtung der Längsachse des Extrusionskopfes gegeneinander versetzt angeordnet sind.

22. Vorrichtung nach Anspruch 13, dadurch gekennzeichnet, daß die Aufnahmekanäle parallel zur Längsachse des Extrusionskopfes unterschiedlich lang sind.
